# EUROPEAN PATENT SPECIFICATION

(11) **EP 2 852 278 B1**
(45) Date of publication and mention of the grant of the patent: **01.11.2017**
(21) Application number: 13760729.7
(22) Date of filing: 12.03.2013
(51) Int. Cl.: A01J 25/00, A01J 25/11, A23C 19/024, A23C 19/045, A23C 19/068, A23C 19/076, A23C 19/05, A23C 19/06

(54) **METHOD AND DEVICE FOR PREPARING CHEESE IN A CONTINUOUS PROCESS**
VERFAHREN UND VORRICHTUNG ZUR HERSTELLUNG VON KÄSE IN EINEM KONTINUIERLICHEN PROZESS
PROCÉDÉ ET DISPOSITIF DE PRÉPARATION DE FROMAGE SELON UN PROCÉDÉ CONTINU

(30) Priority: 12.03.2012 FI 20120076; 17.08.2012 FI 20125859
(43) Date of publication of application: 01.04.2015
(73) Proprietor: Kauppinen, Raija, 88610 Vuokatti (FI)
(72) Inventor: Kauppinen, Raija, 88610 Vuokatti (FI)
(74) Representative: Berggren Oy, Tampere
(86) International application number: PCT/FI2013/050276
(87) International publication number: WO 2013/135960

(56) References cited:
- EP-A1- 0 779 032
- WO-A1-98/08396
- GB-A- 1 035 297
- US-A- 2 368 919
- US-A- 3 210 845
- US-A- 4 254 698
- US-A- 4 485 731
- US-A- 4 713 254

## Description

### Field of the invention

The present invention relates to a method and device for preparing cheese in a continuous process. More particularly the present invention relates to a process for preparing an egg cheese or the like.

### Background of the invention

The cheese making has traditionally been a batch process. After conditioning and pasteurizing the milk is led to large 1000-10000 liter cheese cookers. Acidifiers and rennets are added. The process is monitored according to any cheese making recipe program. When the desired conditions have been obtained, the cheese mass is processed according to the specific protocol for each cheese. After one batch has been prepared, the equipment must be cooled and washed.

Also egg cheese has been prepared in a cheese kettle. It has however not been possible to prepare such cheese in large 5000-10000 kettles, because of poor control of high temperatures and process conditions. Egg cheese behaves in a different way when compared to a regular cheese mass. Egg cheese mass does not flow to the bottom of the kettle such as the regular cheese mass does.

Also the handling of large amounts of hot (over 85°C) whey solutions is difficult, so the preparation of egg cheese has remained as a leisure activity or is carried out at small home cheese dairies.

However, egg cheese and the like represents a traditional cheese type, such as Finnish egg cheese or Czech Hrutka type of cheese. The protein content thereof is close to the one of meat and therefore it is suitable protein source for non-meat eaters. Thus, the egg cheese is underrated because of its difficult production method.

Modlera and Emmons (International Dairy Journal 11(2001) 517-523) describe a continuous ricotta process. Ricotta is a high-moisture soft cheese that is prepared mainly by heating whey or combinations of whey and milk. In the process heated (88-90°C) initial blend of whey and milk is pumped to a holding or denaturation tube, wherein the whey proteins are denatured and rendered susceptible to aggregation once lactic, acetic or citric acid is added to coagulations lines. Once acid has been added to each coagulation tube, the curd mass will begin to form within a few meters from the injection point and move up through the coagulation tube in a plug-flow fashion. Such process in a long tube is difficult to control and the cheesed mass is susceptible to overheating and the tube may be blocked easily. As ricotta has totally different properties, the process of Modlera and Emmons definitely is not suitable for preparing egg cheeses and the like.

US4254698 discloses a machine for producing a precipitated cheese from milk-containing liquid for form ricotta cheese. The machine contains a tank defining a chamber for receiving the milk-containing liquid. The cheese mass rises in the tank and is actively scooped into a funnel by blade. The whey falls towards drain at the bottom of the tank. The flow rates are sensed by sensors and the system contains controllers, valves, mechanical blades for controlling and moving the cheese mass in the reactor. The whey fraction of ricotta cheese does not fully separate from the cheese mass and the turbid whey fraction is recovered from the bottom of the reactor.

US4713254 discloses process for recovering a curd from cow's milk having casein and soluble proteins therein comprising:
(a) admixing cow's milk with non-milk soluble proteins to form a solution; then
(b) adjusting the pH of the solution to an alkaline pH of less than about 8.0; then
(c) heating the solution to a temperature in the range of about 65.6°C to 85.0°C; and
(d) holding the heated solution for a time period sufficient to permit the formation of casein-soluble protein complex; then
(e) adjusting the temperature of the solution to the range of about 32.2°C and 76.7°C; and
(f) adjusting the pH of the solution to the range of 4.2 to 5.5 to form a precipitate of the casein-soluble protein complex in a whey; and then
(g) separating the complex precipitate to recover the curd from the whey, said curd being useful as both the curd ingredient in the making of natural cheeses and as the natural cheese ingredient in the making of processed and imitation cheeses.

WO98/08396 discloses a process for the preparation of a fresh cheese product, characterized in that milk is heat treated by keeping it at about 65 - to about 95°C for about 0.5 to about 15 hours, or by heating it to 135-143°C for 4-6 seconds, pH of the heat treated milk is adjusted to the value of 5.7-6.0, the mixture obtained is heated to about 70 - about 95°C, whereby coagulation takes place; the coagulated mass is maintained at the temperature achieved for about 0.5 to about 6 hours, the mass is homogenized at the pressure of about 50 to about 300 kp/cm² and at a temperature of about 60 to about 90°C, and cooled.

US3210845 discloses an apparatus for the continuous manufacture of conventional curd. The apparatus has a coagulation chamber with means at its top portion for cutting the slowly moving stream of curd. There is need for new improved methods for preparing egg cheeses and the like. The process should be simple and the capacity should be increased. The use of complex equipment setups should be avoided. The known methods are not suitable for continuous processes as the regular process cannot be applied because of the different properties of egg cheese materials.

### Summary of the invention

In the present invention it was surprisingly found out that continuous production of egg cheese is possible. The properties of the egg cheese mass can be utilized in a process wherein the cheese mass rises up in a reactor. Also a cheese mass containing sour milk has similar properties.

The present invention provides a method for preparing cheese in a continuous process, comprising
(i) providing milk heated to 65-90°C,
(ii) providing supplemental mass containing egg and/or sour milk,
(iii) combining the heated milk and the supplemental mass to form a mixture,
(iv) adding precipitation agent to the mixture,
(v) heating the mixture to 65-95°C, and
(vi) feeding the heated mixture to the bottom of a reactor at the lowest part of the reactor,
   wherein the heated mixture coagulates and forms a cheese mass, which rises in the reactor,
(vii) discharging the cheese mass containing all or substantially all of the whey from the top of the reactor from the highest part of the reactor, and
(viii) recovering the cheese mass.

The present invention also provides a method for producing whey, comprising preparing cheese with the above method, discharging the cheese mass containing all or substantially all of the whey from the top of the reactor onto an endless wire, wherein a whey fraction separates from the cheese mass, recovering the cheese mass from the wire, and recovering the whey fraction for example by leading the whey fraction to a separator to recover whey.

The present invention also provides a device for producing cheese in a continuous process, comprising
- a first container for milk, connected to a line with a pump for pumping the milk,
- said line being connected to a first heater for heating the milk feed from the first container,
- a second container for supplemental mass containing egg and/or sour milk, connected to a line which connects to a line from said first heater to combine the heated milk feed and the supplemental mass feed,
- a mixer connected to said combined line to mix the combination of feeds,
- a third container for precipitation agent, connected to a line from said mixer to combine the precipitation agent feed to the mixed feed,
- the line from the mixer being connected to a second heater for heating the mixed feed containing the milk, the supplemental mass and the precipitation agent, and
- a reactor having an inlet in the bottom at the lowest part of the reactor and an outlet at the top at the highest part of the reactor, wherein the line from the second heater is connected to the inlet of the reactor to feed the heated mixed feed into the bottom of the reactor and to discharge the cheese mass containing all or substantially all of the whey from the outlet at top of the reactor.

It is an advantage of the present invention that egg cheese and the like can be produced in a continuous process with high flow rate, which enables the production of large amounts of cheese. It also saves time and money and reduces the need for cooling and cleaning the equipment as frequently as in the batch process.

Another advantage is that the system setup is simple. The monitoring and the control of the process are easy, especially when compared to applications which utilize tubes, mechanical mixers or other means for moving the cheese mass, electrically controlled valves or the like, especially in the reactor. In the present invention the reactor can be monitored and controlled easily and the temperature, consistency, pH etc. of the cheese mass can be reliably controlled. As there is generally only one inlet and only one outlet for the cheese mass, which moves only upwards, no separate mechanical means or pressurized gas for moving the mass are required inside the reactor. Further, the invention enables the use of several parallel reactors and therefore very high output.

Still another advantage of the present invention is that the solid cheese mass and the clear liquid whey fraction can be easily separated, recovered and further processed. The whey fraction is recovered after the cheese mass has been discharged from the reactor so no separate drain valves or the like are required in the setup. The present invention enables an industrial scale production of different cheese products, especially egg cheeses. As the whey separates clearly from the cheese mass it can be recovered with high efficiency at a wire.

Still another advantage of the present invention is that a nutritionally valuable food product which does not contain any meat is obtained. Such egg cheese may be used in a variety of foods, such as to replace hamburger meat patty with a slice of the cheese.

### Brief description of the drawings

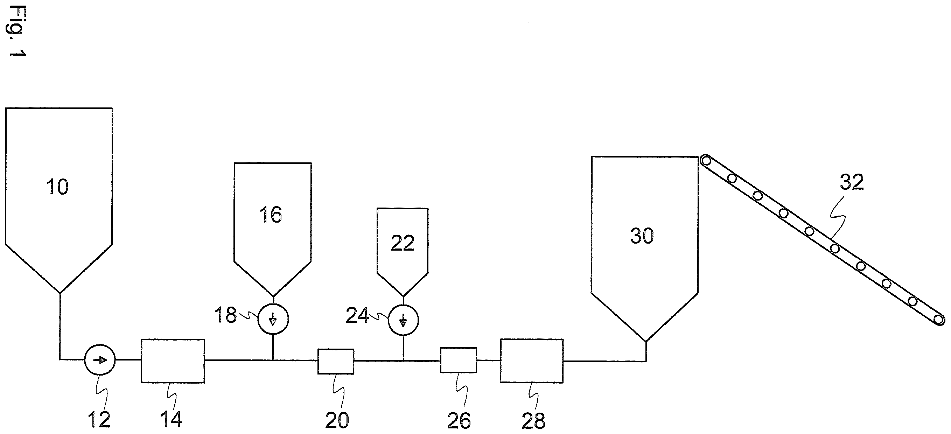

- Figure 1: shows a process chart of an embodiment of the present invention

### Detailed description of the invention

The present invention provides a method for preparing cheese in a continuous process, comprising (i) providing a source of milk and preferably heating the milk. The milk may be whole milk, which may contain fat for example in the range of 3.5-8%, low-fat milk containing fat for example in the range of 0.5-3%, or substantially fat-free milk. The milk may be originated for example from cow, goat, sheep or any other suitable animal. In one example the milk is not pasteurized as it will be pasteurized in the cheese making process. The milk in step (i) is heated to above about 65°C, such as to about 80°C, but below boiling point, for example below 90°C. Generally the temperature is in the range of about 65 to 85°C.

The method also comprises (ii) providing a source of egg and/or sour milk. This source is herein called the supplemental mass. The temperature of said supplemental mass must be low enough to prevent any precipitation of the ingredients, such as under 37°C. In one embodiment the supplemental mass contains egg. In another embodiment the egg is partly replaced with sour milk in the supplemental mass. In one embodiment the egg is totally or substantially replaced by sour milk in the supplemental mass, which makes the cheese slightly more acidic. In such case the required amount of sour milk in the supplemental mass is higher than the amount of egg generally required, such as 2-3 times higher. The supplemental mass may also contain up to about 20% (w/w) of other ingredients, such as water.

The egg may be provided as egg mass, which may be prepared just before use or it may be a commercial or industrial product. In one example the egg mass contains up to about 20% (w/w) of water. Generally the structure of the egg is broken by mixing and the egg mass may be sieved before adding to the supplemental mass.

In the next step the process comprises (iii) combining the heated milk and the supplemental mass to form a mixture. The temperature of said mixture must be low enough to prevent substantial precipitation of the ingredients, preferably under 70°C The amount of the supplemental mass addition to the heated milk may be in the range of 10-50% (w/w) of the total mixture, such as in the range of 20-25%, for example about 21%. In one example the mixture is mixed with any suitable means for mixing, such as a mechanical mixer, before the next step.

In one example used in a small-scale batch process the cheese mass contains about 10 liters of milk, about 2 liters of sour milk, and 5 eggs a about 60 g (about 300 g of eggs). This makes the ratio of milk:sour milk:egg approximately 30:6:1. Such recipes, ingredients and amounts thereof used in batch processes may also be applied herein. In another recipe about 1 liter milk is combined with about 5 dl of sour milk and two eggs.

Generally the ratio of milk to eggs (weight:weight) may be in the range of 10:1 to 50:1, such as in the range of 20:1 to 40:1, for example about 30:1. The ratio of milk to sour milk (weight:weight) may be in the range of 10:1 to 2:1, such as about 5:1 to 6:1.

In the next step the process comprises (iv) adding one or more precipitation or pH adjusting agent to the mixture, or to the mixed feed, which agent may also be called as a coagulant. The precipitation or pH adjusting agent may comprise rennet, acidifying or souring agent, or a coagulation/precipitating agent, which may be selected from lactic acid, acetic acid, citric acid, potassium chloride and combinations thereof. Also sour milk or citrus juice may be used as a precipitation agent. Generally the pH of the precipitation agent is acidic, such as in the range of about pH 2.6-3.8. Such cheese may be called an acid-precipitated cheese or paneer. Such acid-precipitated cheeses can be made without a culture which is typical for most of other cheeses.

The pH of the acidified mass must be over pH 2 as too low pH will harden the mass (the same effect as too high temperature). However, the pH must be acidic enough, such as a pH less than 4. Generally the pH of the mass may be in the range of about pH 2.8-3.8.

In the next step the process comprises (v) heating the obtained mixture. The mixture can be mixed with any suitable means for mixing, such as a mechanical mixer, before or during the next step. The mixture must be heated to a temperature which is high enough to precipitate the milk, such as at least about 65°C, for example in the range of about 65-95°C, generally in the range of about 87-92°C. If the temperature is not high enough, the milk will not precipitate, the yield will be low and the whey fraction will remain turbid. On the other hand, the boiling of the mass should be avoided.

In the next step the process comprises (vi) feeding the heated mixture to the bottom of a reactor. The "bottom" generally refers to the lowest or lowermost part of the reactor, such as a tip of a cone, so the entering cheese mass only moves upwards. The heated mixture coagulates and forms a raw cheese mass, which rises in the reactor. The coagulation may begin already before the mass is fed to the reactor (in step iv or v), and/or the mass begins to or continues to coagulate in the reactor. The reactor may be any suitable vessel, container or cooker, which is wide enough to enable proper mixing of the mixture and free (upward) flow of the mixture. In one embodiment the mixture is mixed in the reactor, preferably with a separate mixer. The mixing is preferably carried out when the mass begins to precipitate and the whey fraction begins to separate. The temperature of the reactor in monitored and controlled to maintain the desired temperature. The reactor is preferably heated with circulating water to achieve even heating. If for example steam would be used the cheese mass might overheat and burn in the reactor.

The flow rate depends on the volume of the reactor. Generally it takes about 20 to 30 minutes (dwell time) for the mass to go through the reactor (about 2-3 reactor volumes per hour). If the time would be too high, the cheese will harden, crumble and it will be hard to mold. On the other hand, if the time is too short, the cheese mass will be watery and a significant part of it will be lost in the whey fraction.

The volume of the reactor may be in the range of about 500-5000 liters, such as about 2000-4000 liters, or about 1000-1600 liters. If the reactor volume would be larger, it would be hard to control the conditions in the reactor. Generally a reactor of about 200-2000 liters may be used for most applications. The flow rate in the reactor may therefore be in the range of about 200-12000 liter per hour, such as 1000-10000 l/h, for example about 2000-4000 liters per hour. In one example the reactor has a diameter of about 1 meter and height of about 2 meters. Such reactor has a volume of about 1570 liters and a typical dwell time is about 30 minutes, which provides an average output of about 3140 liters per hour. Reactor of such size or smaller makes the process easier to handle. No mixers or separate heaters are required inside the reactor to keep the temperature or consistency of the mass uniform in such reactor. Generally such optimum reactor volume may be in the range of about 200-1600 liters, for example about 1000-1600 liters. In one example a flow rate of about 3000-4500 liters per hour is used, such as 3000-3500 liters per hour.

If vary large volumes are needed, plurality, i.e. more than one of reactors may be utilized, such as 2, 3 or 4 reactors. In such case the reactors are arranged in parallel.

Generally the flow rate of the overall process, in any of the steps (i) to (vi), is in the range of about 200-12000 l/h, such as 1000-12000 l/h, for example about 1500-8000 l/h, such as about 2000-6000 l/h. In some cases lower flow rates may be used, such as about 200-2000 l/h or 200-1000 l/h. The flow rate is generally substantially the same in the whole setup and may be adjusted by controlling the speed of the pump(s). Generally no overpressure (in addition to the pressure caused by the flow) is required and the process may be carried out without pressure regulation.

In the next step the process comprises (vii) discharging the cheese mass from the top of the reactor, and (viii) recovering the cheese mass. The discharged cheese mass contains also all or substantially all of the whey of the original cheese mass. The "top" generally refers to the highest or uppermost part of the reactor, such as the edge of the reactor or a tip of a cone, so the outgoing cheese mass only moves upwards. The whey fraction is preferably not separated from the cheese mass inside the reactor and it is not recovered from the bottom of the reactor. The cheese mass will discharge preferably without any separate mechanical means, such as moving blades or the like which would push the mass forward.

In one embodiment the method further comprises discharging the cheese mass from the top of the reactor onto a wire, such as an endless wire, wherein a whey fraction separates from the cheese mass, and recovering the cheese mass from the wire.

The wire may be any suitable (endless) wire or continuous flow line (conveyor belt). The speed of the wire may be adjusted according to the output from the reactor.

The wire may be a screen wire which helps separating the whey fraction from the mass. With a suitable mesh size the liquid fraction containing most of the whey and moisture will flow through the wire by gravity and can be collected and recovered. In one embodiment the whey fraction is led to a separator to recover whey.

Whey may be used to produce cheese or other products for human or animal consumption. It may also be used as an additive in many processed foods, including breads, crackers, and commercial pastry, and in animal feed. The whey may be used for example to prepare drink, sorbet, serbet and the like. Whey protein may also be used as a nutritional supplement, such as a dry whey protein preparation.

In one example the recovered cheese mass is homogenized to produce smooth mass, such as curd. In one example, when the cheese mass is not homogenized, more rough and grainy cheese is obtained, such as cottage cheese type of product.

In one embodiment the recovered cheese mass is led to a food casing from the wire to obtain a packed cheese product, such as a cheese bar. The cheese mass may be salted and/or spiced after it has been recovered from the reactor, or salt and/or spices may be added already in any of the steps (i) to (vi). The salt and/or spices may be in a liquid form. The cheese mass may be salted for example to a salt concentration of about 1-2 % (w/w), such as 1-1.5 % (w/w). The spices may include any suitable spices or seasoning, such as sugar, herbs, garlic or the like. Food casings are generally used to pack different kinds of food products, such as sausages and cheeses. The food casings used are usually made from a variety of materials, for example natural gut or synthetic materials. The synthetic materials can generally be divided into several groups: plastic casings, which can be mono- or multilayer types and have quite low melting points; cellulose casings, which are usually quite inexpensive but relatively unstable; fibrous casings, which comprise cellulose regenerated from viscose with a paper reinforcement; collagen casings and net types of casing, such as ham nets and stockinet types of net.

Generally these food casing are tubular in shape and the food product comprises a pasty emulsion which is stuffed into the casing. After the stuffing the casing is clipped or otherwise sealed to form a sausage type unit. Then the encased product may be further cooked and/or chilled. Finally the casing may be opened and the cooked food may be further processed, for example by slicing and repacking.

In one example the obtained cheese is sliced into patty-like slices, which may be used in variety of foods, for example as a non-meat hamburger patty.

The method described above may be carried out in the device arrangement described below.

The present invention provides a device or a device arrangement or setup for producing cheese in a continuous process, comprising a first container 10 for milk, connected to a line, wherein said line is connected to a first heater 14 for heating the milk feed from the first container. The heater may be any suitable kind of heater, such as a heat exchanger. In one example the heater is a plate heat exchanger. The heater may also be a tube heat exchanger, or any other suitable type. The choice of the heat exchanger may depend on the available energy source. There is a first pump 12 in the line for pumping the milk. The pump may be located before or after the heater. Preferably the pump is located before the heater.

There is further a second container 16 for supplemental mass, connected to a line which connects to the line from said first heater 14 to combine the heated milk feed and the supplemental mass feed. There may be also a second pump 18 for pumping the supplemental mass feed, or the mixture of supplemental mass and the milk.

The containers described herein may be any type of suitable containers, such as silo type of containers having a cone shape.

A mixer 20 is connected to said combined line to mix the combination of feeds.

There is further a third container 22 for precipitation/pH adjusting agent, connected to a line from said mixer to combine the precipitation agent feed to the mixed feed, which contains the milk and the supplemental mass. There may also be a third pump 24 for pumping the precipitation agent, or the mixture of the precipitation agent and the previous mixed feed. A mixer 26 may be connected to said combined line to mix the combination of all the feeds.

The line from the optional mixer 26 is connected to a second heater 28 for heating the mixed feed containing the milk, the supplemental mass and the precipitation agent.

There is further a reactor 30 having an inlet in the bottom and an outlet at the top, wherein the line from the second heater 28 is connected to the inlet of the reactor to feed the heated mixed feed into the bottom of the reactor. Generally there is only one main inlet and only one main outlet in the reactor. The main inlet or main outlet refer to a duct or opening through which the cheese mass flows into the reactor or out from the reactor. The reactor may also contain other minor openings for example for any sensor or controlling means. The reactor may be any container, tank, vessel or cooker suitable for food processing. The volume of the reactor may be in the range of 500-4000 liters as discussed earlier. The reactor may also have a cone shape or any other suitable shape. The bottom or the top of the reactor, or both, may be cone shaped. The reactor is generally made of any suitable heat and/or acid resistant material, such as stainless steel. In one example the reactor has a jacket heating, for example with circulating hot water or other liquid, and the temperature is monitored and controlled. The circulating water may have a temperature for example in the range of 100-110°C and it may be pressurized. In one embodiment there is more than one reactor 30 arranged in parallel wherein the line from the second heater 28 is connected to the inlets of said reactors to feed the heated mixed feed into the bottoms of said reactors.

The instrumentation may have means for monitoring and controlling the process to maintain the desired conditions, such as one or more temperature probes in any of the containers, means for monitoring and controlling any of the heaters, means for monitoring and controlling the flow speed (e.g. the speed of any of the pumps, means for monitoring and controlling mixing (e.g. the speed of any of the mixers), means for monitoring and controlling the movement of the wire (e.g. the speed), means for monitoring and controlling any valves etc. The means for monitoring and/or controlling said components of the setup may comprise a computer or any other processing means arranged to carry out the necessary monitoring and/or controlling actions.

Optionally there is a mixer in the reactor for mixing the content of the reactor, such as a blade mixer or any other suitable mixer. In one example there is a heater in the mixer. The purpose of the mixer is preferably not to push the cheese mass forward, but only to mix the mass.

In one embodiment the outlet of the reactor is connected to an endless wire 32 to discharge the content of the reactor onto the wire, said wire being a wire sieve arranged to separate liquid fraction from the content of the reactor while any solid mass is arranged to be recovered from the wire. There is generally a packing unit wherein the cheese mass is processed, for example packed into suitable casings, such as the casings described above.

The present invention is now explained with references to examples which are provided to enlighten the idea of the invention and should not be considered limiting the invention.

### Examples

### Example 1.

Cold milk (+5°C) was preheated and pumped from raw milk tank to pasteurizing (Δ65). After pasteurizing the hot milk was fed to a next step wherein egg-sour milk mass was added to the milk stream (85°C) in a controlled way according to the recipe. The ratio of milk:sour milk:egg was 30:6:1. The mixing of these two flows having different temperatures was carried out by a mixing system. This was followed by an addition of citric acid to adjust the pH and CaCl₂ to enhance coagulation. After this the mass was fed to a heating section wherein it was reheated to 85-90°C.

Next, the mass was fed to the cheese making reactor. This took about 20-30 minutes. The development of the mass was monitored with the instrumentation and the flow rate of the mass was adjusted with a feed pump. After the mass was ready it was discharged from the top of the reactor.

Because the flow is continuous the ready mass will be fed in a controlled way to a wire wherein the whey fraction and cheese were separated. The separation of the whey was carried out on the wire which transports the cheese to further processing. The cheese was salted and the whey was separated into clear whey liquid. The cheese mass separated from the separation ("cheese dust") was recycled back to the cheese process or packed.

The cheese mass was stuffed into a tubular food casing to obtain a long bar-like cheese. After cooling the cheese was cut into even-sized slices and the slices were repacked.

## Claims

1. A method for preparing cheese in a continuous process, comprising
(i) providing milk heated to 65-90°C,
(ii) providing supplemental mass containing egg and/or sour milk,
(iii) combining the heated milk and the supplemental mass to form a mixture,
(iv) adding precipitation agent to the mixture,
(v) heating the mixture to 65-95°C, and
(vi) feeding the heated mixture to bottom of a reactor at the lowest part of the reactor,
wherein the heated mixture coagulates and forms a cheese mass, which rises in the reactor,
(vii) discharging the cheese mass containing all or substantially all of the whey from the top of the reactor from the highest part of the reactor, and
(viii) recovering the cheese mass.

2. The method of claim 1, **characterized in that** the method further comprises discharging the cheese mass from the top of the reactor onto an endless wire, wherein a whey fraction separates from the cheese mass, and recovering the cheese mass from the wire.

3. The method of any of the preceding claims, **characterized in that** the milk in step (i) is heated to 75-85°C.

4. The method of any of the preceding claims, **characterized in that** after step (iv) the mixture is mixed before feeding into step (vi).

5. The method of any of the preceding claims, **characterized in that** in step (v) the mixture is heated to 87-92°C.

6. The method of any of the preceding claims, **characterized in that** in step (vi) the mixture is mixed in the reactor.

7. The method of any of the preceding claims, **characterized in that** the recovered cheese mass is led to a food casing to obtain a packed cheese product.

8. The method of any of the preceding claims, **characterized in that** the precipitation agent is selected from lactic acid, acetic acid, citric acid, potassium chloride, sour milk and combinations thereof.

9. The method of any of the preceding claims, **characterized in that** the ratio of milk to eggs (weight:weight) is in the range of 10:1 to 50:1, such as in the range of 20:1 to 40:1, for example 30:1.

10. A method for producing whey, comprising preparing cheese with the method of any of the preceding claims, discharging the cheese mass containing all or substantially all of the whey from the top of the reactor onto an endless wire, wherein a whey fraction separates from the cheese mass, recovering the cheese mass from the wire, and recovering the whey fraction for example by leading the whey fraction to a separator to recover whey.

11. A device for producing cheese in a continuous process, comprising
- a first container (10) for milk, connected to a line with a pump (12) for pumping the milk,
- said line being connected to a first heater (14) for heating the milk feed from the first container (10),
- a second container (16) for supplemental mass containing egg and/or sour milk, connected to a line which connects to line from said first heater to combine the heated milk feed and the supplemental mass feed,
- a mixer (20) connected to said combined line to mix the combination of feeds,
- a third container (22) for precipitation agent, connected to a line from said mixer to combine the precipitation agent feed to the mixed feed,
- the line from the mixer being connected to a second heater (28) for heating the mixed feed containing the milk, the supplemental mass and the precipitation agent, and
- a reactor (30) having an inlet in the bottom at the lowest part of the reactor and an outlet at the top at the highest part of the reactor, wherein the line from the second heater is connected to the inlet of the reactor to feed the heated mixed feed into the bottom of the reactor and to discharge the cheese mass containing all or substantially all of the whey from the outlet at top of the reactor.

12. The device of claim 11, **characterized in that**
- the outlet of the reactor is connected to an endless wire (32) to discharge the content of the reactor (30) onto the wire,
- said wire being a wire sieve to separate liquid fraction from the content of the reactor while any solid mass is to be recovered from the wire.

13. The device of any of the claims 11-12, **characterized in that** the reactor has a mixer in the reactor for mixing the content of the reactor.

14. The device of any of the claims 11-12, **characterized in that** there is no mixer in the reactor.

15. The device of any of the claims 11-14, **characterized in that** the device comprises more than one reactor arranged in parallel.

## Patentansprüche

1. Ein Verfahren zur Herstellung von Käse in einem kontinuierlichen Vorgang, das Folgendes umfasst:
(i) Bereitstellen von auf 65-90 °C erhitzter Milch,
(ii) Bereitstellen von zusätzlicher Masse enthaltend Ei und/oder Sauermilch,
(iii) Kombinieren der erhitzten Milch und der zusätzlichen Masse, um eine Mischung zu bilden,
(iv) Hinzufügen von Fällungsmittel zu der Mischung,
(v) Erhitzen der Mischung auf 65-95 °C, und
(vi) Zuführen der erhitzten Mischung zum Boden eines Reaktors am untersten Teil des Reaktors,
wobei die erhitzte Mischung koaguliert und eine Käsemasse bildet, welche im Reaktor aufsteigt,
(vii) Ausleiten der Käsemasse, die die gesamte oder im Wesentlichen gesamte Molke enthält, von der Oberseite des Reaktors vom höchsten Teil des Reaktors, und
(viii) Gewinnen der Käsemasse.

2. Verfahren gemäß Anspruch 1, **dadurch gekennzeichnet, dass** das Verfahren darüber hinaus das Ausleiten der Käsemasse von der Oberseite des Reaktors auf einen Endlosdraht, wobei eine Molkefraktion von der Käsemasse abgetrennt wird, sowie das Gewinnen der Käsemasse von dem Draht umfasst.

3. Verfahren gemäß einem der vorhergehenden Ansprüche, **dadurch gekennzeichnet, dass** die Milch in Schritt (i) auf 75-85°C erhitzt wird.

4. Verfahren gemäß einem der vorhergehenden Ansprüche, **dadurch gekennzeichnet, dass** nach Schritt (iv) die Mischung gemischt wird, bevor sie dem Schritt (vi) zugeführt wird.

5. Verfahren gemäß einem der vorhergehenden Ansprüche, **dadurch gekennzeichnet, dass** in Schritt (v) die Mischung auf 87-92 °C erhitzt wird.

6. Verfahren gemäß einem der vorhergehenden Ansprüche, **dadurch gekennzeichnet, dass** in Schritt (vi) die Mischung im Reaktor gemischt wird.

7. Verfahren gemäß einem der vorhergehenden Ansprüche, **dadurch gekennzeichnet, dass** die gewonnene Käsemasse zu einer Nahrungsmittelhülle befördert wird, um ein verpacktes Käseprodukt zu erhalten.

8. Verfahren gemäß einem der vorhergehenden Ansprüche, **dadurch gekennzeichnet, dass** das Fällungsmittel aus Milchsäure, Essigsäure, Zitronensäure, Kaliumchlorid, Sauermilch und Kombinationen davon ausgewählt ist.

9. Verfahren gemäß einem der vorhergehenden Ansprüche, **dadurch gekennzeichnet, dass** das Verhältnis von Milch zu Eiern (Gewicht:Gewicht) im Bereich von 10:1 bis 50:1, beispielsweise im Bereich von 20:1 bis 40:1, z.B. 30:1 liegt.

10. Ein Verfahren zur Herstellung von Molke, das die Herstellung von Käse mit dem Verfahren gemäß einem der vorhergehenden Ansprüche, das Ausleiten der Käsemasse, die die gesamte oder im Wesentlichen gesamte Molke enthält, von der Oberseite des Reaktors auf einen Endlosdraht, wobei eine Molkefraktion von der Käsemasse abgetrennt wird, das Gewinnen der Käsemasse von dem Draht, und das Gewinnen der Molkefraktion umfasst, zum Beispiel durch Führen der Molkefraktion zu einem Separator zur Gewinnung von Molke.

11. Eine Vorrichtung zur Herstellung von Käse in einem kontinuierlichen Vorgang, die Folgendes aufweist:
- einen ersten Behälter (10) für Milch, der mit einer Leitung mit einer Pumpe (12) zum Pumpen der Milch verbunden ist,
- wobei die Leitung mit einem ersten Heizelement (14) zum Erhitzen der aus dem ersten Behälter (10) zugeführten Milch verbunden ist,
- einen zweiten Behälter (16) für die zusätzliche Masse enthaltend Ei und/oder Sauermilch, der mit einer Leitung verbunden ist, die an eine Leitung vom ersten Heizelement angeschlossen ist, um die Zufuhr von erhitzter Milch und die Zufuhr von zusätzlicher Masse zu kombinieren,
- einen Mixer (20), der mit der kombinierten Leitung verbunden ist, um die Kombination von Zufuhrmaterialen zu mischen,
- einen dritten Behälter (22) für das Fällungsmittel, der mit einer Leitung von dem Mixer verbunden ist, um das zugeführte Fällungsmittel mit der zugeführten Mischung zu kombinieren,
- wobei die Leitung von dem Mixer mit einem zweiten Heizelement (28) zum Erhitzen des gemischten Zufuhrmaterials, enthaltend die Milch, die zusätzliche Masse und das Fällungsmittel, verbunden ist, und
- einen Reaktor (30) mit einem Einlass in dem Boden am untersten Teil des Reaktors und einem Auslass an der Oberseite des höchsten Teils des Reaktors, wobei die Leitung von dem zweiten Heizelement mit dem Einlass des Reaktors verbunden ist, um das erwärmte gemischte Zufuhrmaterial in den Boden des Reaktors zu befördern, und die Käsemasse, die die gesamte oder im Wesentlichen gesamte Molke enthält, aus dem Auslass an der Oberseite des Reaktors auszuleiten.

12. Vorrichtung gemäß Anspruch 11, **dadurch gekennzeichnet, dass**
- der Auslass des Reaktors mit einem Endlosdraht (32) verbunden ist, um den Inhalt des Reaktors (30) auf den Draht auszuleiten,
- wobei der Draht ein Drahtsieb zum Trennen der flüssigen Fraktion vom Inhalt des Reaktors ist, während jegliche feste Masse von dem Draht gewonnen werden soll.

13. Vorrichtung gemäß einem der Ansprüche 11 bis 12, **dadurch gekennzeichnet, dass** der Reaktor einen Mixer in dem Reaktor zum Mischen des Inhalts des Reaktors aufweist.

14. Vorrichtung gemäß einem der Ansprüche 11 bis 12, **dadurch gekennzeichnet, dass** in dem Reaktor kein Mixer enthalten ist.

15. Vorrichtung gemäß einem der Ansprüche 11 bis 14, **dadurch gekennzeichnet, dass** die Vorrichtung mehr als einen parallel angeordneten Reaktor aufweist.

## Revendications

1. Procédé de préparation de fromage selon un procédé continu, comprenant les étapes consistant à
(i) fournir du lait chauffé entre 65 et 90°C
(ii) fournir une masse supplémentaire contenant de l'oeuf et/ou du lait caillé,
(iii) combiner le lait chauffé et la masse supplémentaire afin de former un mélange,
(iv) ajouter un agent de précipitation au mélange,
(v) chauffer le mélange entre 65 et 95°C, et
(vi) alimenter le mélange chauffé vers le fond d'un réacteur au niveau de la partie la plus basse dudit réacteur,
dans lequel le mélange chauffé coagule et forme une masse de fromage, qui remonte dans le réacteur,
(vii) décharger la masse de fromage contenant tout ou essentiellement tout le petit lait par le haut du réacteur à partir de la partie la plus élevée du réacteur, et
(viii) récupérer la masse de fromage.

2. Procédé selon la revendication 1, **caractérisé en ce que** le procédé comprend en outre une étape consistant à décharger la masse de fromage par le haut du réacteur sur une toile sans fin, dans lequel une fraction petit lait se sépare de la masse de fromage, et récupérer la masse de fromage à partir de la toile.

3. Procédé selon l'une quelconque des revendications précédentes, **caractérisé en ce que** le lait de l'étape (i) est chauffé entre 75 et 85°C.

4. Procédé selon l'une quelconque des revendications précédentes, **caractérisé en ce que**, après l'étape (iv), le mélange est mélangé avant l'alimentation de l'étape (vi).

5. Procédé selon l'une quelconque des revendications précédentes, **caractérisé en ce que**, à l'étape (v), le mélange est chauffé entre 87 et 92°C.

6. Procédé selon l'une quelconque des revendications précédentes, **caractérisé en ce que**, à l'étape (vi), le mélange est mélangé dans le réacteur.

7. Procédé selon l'une quelconque des revendications précédentes, **caractérisé en ce que** la masse de fromage récupéré est guidée vers un emballage destiné à la nourriture afin d'obtenir un produit fromager emballé.

8. Procédé selon l'une quelconque des revendications précédentes, **caractérisé en ce que** l'agent de précipitation est sélectionné parmi acide lactique, acide acétique, acide citrique, chlorure de potassium, lait caillé et des combinaisons de ceux-ci.

9. Procédé selon l'une quelconque des revendications précédentes, **caractérisé en ce que** le rapport lait sur oeuf (poids:poids) se situe dans la plage comprise entre 10:1 et 50:1, par exemple dans la plage comprise entre 20:1 et 40:1, et est par exemple de 30:1.

10. Procédé permettant de produire du petit lait, comprenant les étapes consistant à préparer du fromage grâce au procédé selon l'une quelconque des revendications précédentes, décharger la masse de fromage contenant tout ou essentiellement tout le petit lait par le haut du réacteur sur une toile sans fin, dans lequel une fraction petit lait se sépare de la masse de fromage, récupérer la masse de fromage à partir de la toile, et récupérer la fraction petit lait, par exemple en amenant la fraction petit lait jusqu'à un séparateur afin de récupérer le petit lait.

11. Dispositif permettant de produire du fromage selon un procédé continu, comprenant
- un premier conteneur (10) destiné au lait, raccordé à une conduite avec une pompe (12) permettant de pomper le lait,
- ladite conduite étant raccordée à un premier dispositif chauffant (14) permettant de chauffer le lait alimenté à partir du premier conteneur (10),
- un deuxième conteneur (16) destiné à la masse supplémentaire contenant de l'oeuf et/ou du lait caillé, raccordé à une conduite qui se raccorde à une conduite en provenance dudit premier dispositif chauffant afin de combiner l'alimentation de lait chauffé et l'alimentation de masse supplémentaire,
- un mélangeur (20) raccordé à ladite conduite combinée afin de mélanger la combinaison d'alimentations,
- un troisième conteneur (22) destiné à l'agent de précipitation, raccordé à une conduite en provenance dudit mélangeur afin de combiner l'alimentation d'agent de précipitation et l'alimentation mélangée,
- la conduite en provenance du mélangeur étant raccordée à un deuxième dispositif chauffant (28) afin de chauffer l'alimentation mélangée contenant le lait, la masse supplémentaire et l'agent de précipitation, et
- un réacteur (30) présentant une entrée au fond au niveau de la partie la plus basse du réacteur et une sortie en haut au niveau de la partie la plus haute du réacteur, dans lequel la conduite en provenance du deuxième dispositif chauffant est raccordée à l'entrée du réacteur afin d'alimenter l'alimentation mélangée chauffée dans le fond du réacteur et afin de décharger la masse de fromage contenant tout ou essentiellement tout le petit lait à partir de la sortie située en haut du réacteur.

12. Dispositif selon la revendication 11, **caractérisé en ce que**
- la sortie du réacteur est raccordée à une toile sans fin (32) afin de décharger le contenu du réacteur (30) sur ladite toile,
- ladite toile constituant un tamis en toile permettant de séparer une fraction liquide du contenu du réacteur, tandis que la masse solide doit être récupérée à partir de la toile.

13. Dispositif selon la revendication 11 ou 12, **caractérisé en ce que** le réacteur présente un mélangeur au sein du réacteur afin de mélanger le contenu du réacteur.

14. Dispositif selon la revendication 11 ou 12, **caractérisé en ce qu'**il n'y a pas de mélangeur dans le réacteur.

15. Dispositif selon l'une quelconque des revendications 11 à 14, **caractérisé en ce que** le dispositif comprend plus d'un réacteur agencé en parallèle.
